# EUROPÄISCHE PATENTANMELDUNG

(11) **EP 4 331 910 A1**
(43) Veröffentlichungstag der Anmeldung: **06.03.2024**
(21) Anmeldenummer: 23194024.8
(22) Anmeldetag: 29.08.2023
(51) Int. Cl.: B60N 2/879

(54) **KOPFSTÜTZE, KOPFSTÜTZEN-SYSTEM, SITZVORRICHTUNG UND KRAFTFAHRZEUG**

(30) Priorität: 30.08.2022 DE 102022208987
(71) Anmelder: VOLKSWAGEN AG, 38440 Wolfsburg (DE)
(72) Erfinder: FROMMHOLZ, Dirk, 38518 Gifhorn (DE)

(57) **Zusammenfassung**

Die vorliegende Erfindung betrifft eine Kopfstütze (10) für eine Sitzvorrichtung (110) für ein Kraftfahrzeug (100), die Kopfstütze (10) aufweisend eine Stützfläche (20) für einen Kopf eines Insassen des Kraftfahrzeugs (100), eine Aufnahmevertiefung (30) für die Aufnahme eines Headsets (120), eine Erfassungsvorrichtung (40) zur Erfassung des Headsets (120) in der Aufnahmevertiefung (30), eine Ladevorrichtung (50) zur kabellosen Bereitstellung von elektrischer Energie an das Headset (120) in der Aufnahmevertiefung (30) und eine Steuervorrichtung (60) zur Steuerung der Bereitstellung von elektrischer Energie durch die Ladevorrichtung (50) in Abhängigkeit von der Erfassung des Headsets (120) durch die Erfassungsvorrichtung (40). Ferner betrifft die Erfindung ein Kopfstützen-System (130), ein Kraftfahrzeug (100) und eine Sitzvorrichtung (110) für ein Kraftfahrzeug (100), die Sitzvorrichtung (110) aufweisend eine Kopfstütze (10).

## Beschreibung

Die vorliegende Erfindung betrifft eine Kopfstütze für eine Sitzvorrichtung für ein Kraftfahrzeug. Ferner betrifft die Erfindung ein Kopfstützen-System für ein Kraftfahrzeug, das Kopfstützen-System aufweisend eine Kopfstütze und ein Headset. Auch betrifft die Erfindung eine Sitzvorrichtung für ein Kraftfahrzeug, die Sitzvorrichtung aufweisend eine Kopfstütze und eine Sitzfläche für einen Insassen des Kraftfahrzeugs sowie ein Kraftfahrzeug.

Das zumindest abschnitts- und/oder zeitweise autonome Fahren von modernen Kraftfahrzeugen ermöglicht gewonnene Zeit für die Insassen des Kraftfahrzeugs, insbesondere den Fahrer. Ein Innenraum eines bekannten Kraftfahrzeugs ist jedoch nicht optimal auf mögliche unterschiedliche Interessen der Insassen ausgelegt. Die bekannten Unterhaltungsmöglichkeiten und somit auch der mögliche Verzicht auf diese Unterhaltungsmöglichkeiten sind in einem Kraftfahrzeug zumeist nicht individuell gestaltbar. Eine Kommunikation zwischen den Insassen wird zumeist durch die Unterhaltungsmöglichkeiten erschwert und muss sich unvorteilhaft gegen die aktiven Unterhaltungsmöglichkeiten, beispielweise durch lautes Reden, durchsetzen. Eine entsprechende Kommunikation ist erneut zumeist von allen Insassen wahrnehmbar und nicht individuell gestaltbar.

Eine übliche Praxis im Kraftfahrzeug umfasst die Verwendung von externen Unterhaltungsgeräten zur Ein- und Ausgabe von Unterhaltungsinhalten und/oder Gesprächen. Das Kraftfahrzeug weist jedoch zumeist nur eine einfache und/oder unvorteilhafte Anbindung der externen Unterhaltungsgeräte und damit eine nicht optimale Synergie der Unterhaltungsgeräte mit dem Kraftfahrzeug, insbesondere einem Infotainmentsystem des Kraftfahrzeugs, und/oder untereinander auf.

Es ist daher Aufgabe der vorliegenden Erfindung, die oben beschriebenen Nachteile im Stand der Technik zu beheben oder zumindest teilweise zu beheben. Insbesondere ist es Aufgabe der Erfindung, eine Kopfstütze für eine Sitzvorrichtung für ein Kraftfahrzeug bereitzustellen, mit der die Verwendung eines Headsets besonders einfach und vorteilhaft ermöglicht wird. Insbesondere ist es ferner die Aufgabe der Erfindung ein Kopfstützen-System für ein Kraftfahrzeug, eine Sitzvorrichtung für ein Kraftfahrzeug sowie ein Kraftfahrzeug bereitzustellen.

Die voranstehende Aufgabe wird durch die Patentansprüche gelöst. Insbesondere wird die Aufgabe gelöst durch eine Kopfstütze für eine Sitzvorrichtung für ein Kraftfahrzeug mit den Merkmalen des unabhängigen Anspruchs 1. Ferner wird die Aufgabe gelöst durch ein Kopfstützen-System für ein Kraftfahrzeug mit den Merkmalen des unabhängigen Anspruchs 11, durch eine Sitzvorrichtung für ein Kraftfahrzeug mit den Merkmalen des unabhängigen Anspruchs 12 und durch ein Kraftfahrzeug mit den Merkmalen des unabhängigen Anspruchs 13. Weitere Vorteile und Details der Erfindung ergeben sich aus den Unteransprüchen, der Beschreibung und den Zeichnungen. Dabei gelten Merkmale, die im Zusammenhang mit der erfindungsgemäßen Kopfstütze beschrieben sind, selbstverständlich auch im Zusammenhang mit dem erfindungsgemäßen Kopfstützen-System, der erfindungsgemäßen Sitzvorrichtung, dem erfindungsgemäßen Kraftfahrzeug und jeweils umgekehrt, sodass bezüglich der Offenbarung zu den einzelnen Erfindungsaspekten stets wechselseitig Bezug genommen wird beziehungsweise werden kann.

Gemäß einem ersten Aspekt der Erfindung wird die Aufgabe gelöst durch eine Kopfstütze für eine Sitzvorrichtung für ein Kraftfahrzeug. Die Kopfstütze weist eine Stützfläche für einen Kopf eines Insassen des Kraftfahrzeugs, eine Aufnahmevertiefung für die Aufnahme eines Headsets, eine Erfassungsvorrichtung zur Erfassung des Headsets in der Aufnahmevertiefung, eine Ladevorrichtung zur kabellosen Bereitstellung von elektrischer Energie an das Headset in der Aufnahmevertiefung und eine Steuervorrichtung zur Steuerung der Bereitstellung von elektrischer Energie durch die Ladevorrichtung in Abhängigkeit von der Erfassung des Headsets durch die Erfassungsvorrichtung auf.

Ein Headset ist im Rahmen der Erfindung als eine Kombination aus zumindest einem Lautsprecher und zumindest einem Mikrofon zu verstehen. Das erfindungsgemäße Headset ist von einem Insassen am Kopf tragbar. Bevorzugt umfasst das Headset und/oder das Mikrofon eine Rauschunterdrückung. Verschiedene konstruktive Ausgestaltungen von Headsets sind grundsätzlich bekannt. Das erfindungsgemäße Headset wird bevorzugt primär oder lediglich mit Bezug auf die Wechselwirkung und/oder Interaktion mit der erfindungsgemäßen Kopfstütze beansprucht. Bevorzugt ist die erfindungsgemäße Kopfstütze mit bekannten, sich am Markt befindlichen Headsets verwendbar. Das Headset ist bevorzugt als kabelloses, insbesondere modular kabelloses, Headset zu verstehen.

Die Kopfstütze weist eine Stützfläche für einen Kopf eines Insassen des Kraftfahrzeugs auf, um die grundsätzlichen ergonomischen und sicherheitstechnischen Funktionen der Kopfstütze zu ermöglichen. Die Stützfläche ist bevorzugt zumindest abschnittsweise gepolstert. Ferner weist die erfindungsgemäße Kopfstütze zumindest eine Aufnahmevertiefung für die Aufnahme eines Headsets auf. Das Headset kann folglich von einem Insassen in die zumindest eine und/oder innerhalb der zumindest einen Aufnahmevertiefung platziert werden. Die Aufnahmevertiefung ist im Rahmen der Erfindung als eine Vorrichtung und/oder ein Volumen zur definierten Ablage des Headsets an und/oder zumindest abschnittsweise in der Kopfstütze zu verstehen. Die zumindest eine Aufnahmevertiefung kann eine zusammenhängende Aufnahmevertiefung oder mehrere Aufnahmevertiefungen umfassen. Bevorzugt weist die Aufnahmevertiefung konische und/oder gefaste Randbereiche zur Führung und/oder zur definierten Positionierung des Headsets in der Aufnahmevertiefung auf. Bevorzugt weist die Aufnahmevertiefung zumindest einen zur umgebenden Oberfläche der Kopfstütze parallelen Bodenabschnitt auf. Bevorzugt weist die Aufnahmevertiefung zumindest einen Magneten und/oder zumindest eine Rastvorrichtung zur Ausrichtung des Headsets in der und/oder zur Führung des Headsets in die Aufnahmevertiefung auf.

Anschaulich beschrieben und für das weitere Verständnis der Beschreibung kann das Headset somit in einer Ablageposition in der zumindest einen Aufnahmevertiefung der Kopfstütze oder auf dem Kopf eines Anwenders platziert werden. Auf dem Kopf eines Anwenders platziert, funktioniert das Headset bevorzugt grundsätzlich gemäß bekannten Headsets und ist zur Ausgabe und Eingabe von Audiodaten ausgestaltet.

Die Kopfstütze umfasst ferner die Erfassungsvorrichtung zur Erfassung des Headsets in der wenigstens einen Aufnahmevertiefung. Die Erfassungsvorrichtung erfasst, ob ein Headset in der wenigstens einen Aufnahmevertiefung der Kopfstütze angeordnet ist. Die Erfassung des Headsets ermöglicht vorteilhaft eine nachfolgend detailliert beschriebene Steuerung in Abhängigkeit von der Erfassung. Die konstruktive Ausgestaltung der Erfassungsvorrichtung wird in einem nachfolgenden Abschnitt beschrieben. Anschaulich beschrieben erkennt die Erfassungsvorrichtung, ob das Headset in der Ablageposition in der zumindest einen Aufnahmevertiefung der Kopfstütze platziert ist.

Die Kopfstütze weist ferner die Ladevorrichtung auf. Die Ladevorrichtung ist zur kabellosen Bereitstellung von elektrischer Energie an das Headset in der Aufnahmevertiefung ausgestaltet. Die kabellose Bereitstellung ist dabei derart zu verstehen, dass keine kabelgebundene Verbindung zwischen dem Headset und der Ladevorrichtung für die Bereitstellung von elektrischer Energie notwendig ist, vorgesehen ist und/oder hergestellt wird. Dabei ist für das Merkmal der kabellosen Bereitstellung von elektrischer Energie an das Headset unerheblich, inwiefern das Headset und/oder die Kopfstütze jeweils Kabel aufweisen. Die Ladevorrichtung ist bevorzugt zur induktiven, kabellosen Bereitstellung von elektrischer Energie an das Headset ausgestaltet. Die Ladevorrichtung ist bevorzugt zumindest abschnittsweise innerhalb, bevorzugt vollständig innerhalb der Kopfstütze angeordnet. Die Ladevorrichtung ist bevorzugt im Bereich von wenigstens einer Ohrmuschel des Headsets und/oder im Bereich von einem Bügel des Headsets in und/oder an der Kopfstütze angeordnet.

Die erfindungsgemäße Steuervorrichtung ermöglicht, dass die Bereitstellung der elektrischen Energie an das Headset durch die Ladevorrichtung in Abhängigkeit von der Erfassung des Headsets durch die Erfassungsvorrichtung erfolgt. Anschaulich formuliert wird bevorzugt eine Bereitstellung von elektrischer Energie an das Headset durch die Ladevorrichtung ermöglicht, wenn das Headset in der Aufnahmevertiefung durch die Erfassungsvorrichtung erfasst wird. Gegenteilig wird keine Bereitstellung von elektrischer Energie an das Headset durch die Ladevorrichtung ermöglicht und/oder verhindert, wenn das Headset in der Aufnahmevertiefung durch die Erfassungsvorrichtung nicht erfasst wird. Bevorzugt ermöglicht die Steuervorrichtung energieeffizient, dass elektronisch oder mechanisch eine Bereitstellung von elektrischer Energie an das Headset verhindert wird, wenn das Headset nicht in der Aufnahmevertiefung erfasst ist. Die Steuervorrichtung ist im Rahmen der Beschreibung als Bestandteil der Kopfstütze, der Sitzvorrichtung und/oder des Kraftfahrzeugs definiert. Alternativ oder zusätzlich ist die Steuervorrichtung als eine Funktionseinheit gemeinsam mit einer vorhandenen Steuervorrichtung der Sitzvorrichtung und/oder des Kraftfahrzeugs ausgestaltet.

Bevorzugt weist die Kopfstütze eine elektrische Schnittstelle zur elektrischen Anbindung an die später beschriebene Sitzvorrichtung und/oder an das Kraftfahrzeug und/oder eine mechanische Schnittstelle zur mechanischen Anbindung an die Sitzvorrichtung auf. Alternativ oder zusätzlich ist die Kopfstütze einstückig mit der Sitzvorrichtung ausgestaltet, beispielsweise in Form einer Sitzschale.

Eine derart ausgestaltete Kopfstütze ist besonders vorteilhaft, da die Verwendung eines Headsets besonders einfach ermöglicht wird, wobei die Steuervorrichtung die Bereitstellung von elektrischer Energie durch die Ladevorrichtung in Abhängigkeit von der Erfassung des Headsets durch die Erfassungsvorrichtung besonders einfach ermöglicht.

Gemäß einer bevorzugten Weiterentwicklung der Erfindung kann bei einer Kopfstütze vorgesehen sein, dass die Kopfstütze eine Datenschnittstelle umfasst, wobei die Datenschnittstelle zur kabellosen Datenübertragung mit dem Headset ausgestaltet ist, wobei die Steuervorrichtung zur Steuerung der kabellosen Datenübertragung durch die Datenschnittstelle in Abhängigkeit von der Erfassung des Headsets durch die Erfassungsvorrichtung ausgestaltet ist. Die Datenschnittstelle ist bevorzugt innerhalb der Kopfstütze oder von der Kopfstütze separat ausgestaltet. Eine kabellose Datenübertragung ist analog zur zuvor beschriebenen kabellosen Bereitstellung von elektrischer Energie derart zu verstehen, dass keine kabelgebundene Verbindung zwischen dem Headset und der Datenschnittstelle für die Datenübertragung notwendig ist, vorgesehen ist und/oder hergestellt wird. Dabei ist für das Merkmal der kabellosen Datenübertragung an das Headset unerheblich, inwiefern das Headset und/oder die Datenschnittstelle jeweils Kabel aufweisen. Die Datenschnittstelle ist bevorzugt zur Datenübertragung an das Headset über einen bekannten Standard, wie beispielsweise Bluetooth, insbesondere wenigstens Bluetooth 5 oder wenigstens 5.3, ausgestaltet. Die Steuerung der kabellosen Datenübertragung durch die Datenschnittstelle in Abhängigkeit von der Erfassung des Headsets durch die Erfassungsvorrichtung ist im Rahmen der Erfindung bevorzugt derart zu verstehen, dass die kabellose Datenübertragung an das Headset gemäß einer ersten Übertragungslogik ausgestaltet ist, wenn das Headset nicht in der Aufnahmevertiefung erfasst ist und die kabellose Datenübertragung an das Headset gemäß einer zweiten Übertragungslogik ausgestaltet ist, wenn das Headset in der Aufnahmevertiefung erfasst ist. Die erste Übertragungslogik ist dabei unterschiedlich zu der zweiten Übertragungslogik ausgestaltet. Eine Übertragungslogik ist im Rahmen der Erfindung als eine Logik zur Handhabung der Datenübertragung zwischen der Kopfstütze und dem Headset zu verstehen. Im Rahmen der Beschreibung sind die Daten der Datenübertragung bevorzugt als Audiosignale zu verstehen. Eine derart ausgestaltete Kopfstütze ist besonders vorteilhaft, da durch die Datenschnittstelle eine kabellose Datenübertragung an das Headset ermöglicht wird, wobei die Steuervorrichtung zur Steuerung der kabellosen Datenübertragung durch die Datenschnittstelle in Abhängigkeit von der Erfassung des Headsets durch die Erfassungsvorrichtung ausgestaltet ist.

Gemäß einer bevorzugten Weiterentwicklung der Erfindung kann bei einer Kopfstütze vorgesehen sein, dass die Datenschnittstelle zur kabellosen Datenübertragung von eingehenden und ausgehenden Audiodaten mit dem Headset ausgestaltet ist, wobei die Steuervorrichtung zur unabhängigen Steuerung der kabellosen Datenübertragung der eingehenden und ausgehenden Audiodaten durch die Datenschnittstelle in Abhängigkeit von der Erfassung des Headsets durch die Erfassungsvorrichtung ausgestaltet ist. Es ist besonders vorteilhaft, wenn die Datenschnittstelle zur kabellosen Datenübertragung von eingehenden und ausgehenden Audiodaten mit dem Headset ausgestaltet ist. Die eingehenden und ausgehenden Audiodaten umfassen bevorzugt Audiosignale, die von dem Headset ausgegeben werden können und/oder von dem Headset aufgenommen wurden. Zum besseren Verständnis ist die Datenschnittstelle als Referenzvorrichtung für die Audiodaten definiert, sodass ausgehende Audiodaten bevorzugt Headset-Lautsprecherdaten sind und eingehende Audiodaten bevorzugt Headset-Mikrofondaten sind. Besonders vorteilhaft ist die Kombination der Datenschnittstelle und der Steuervorrichtung, da gemäß dieser Weiterentwicklung die Steuervorrichtung zur unabhängigen Steuerung der kabellosen Datenübertragung der eingehenden und ausgehenden Audiodaten durch die Datenschnittstelle in Abhängigkeit von der Erfassung des Headsets durch die Erfassungsvorrichtung ausgestaltet ist. Somit wird ermöglicht, dass beispielsweise bei einer Positionierung des Headsets in der Aufnahmevertiefung und einer entsprechenden Erfassung durch die Erfassungsvorrichtung, die ausgehenden Audiodaten der Datenschnittstelle nicht an das Headset gesendet werden und damit nicht auf dem Headset ausgegeben werden. Trotz der Positionierung des Headsets in der Aufnahmevertiefung und einer entsprechenden Erfassung durch die Erfassungsvorrichtung ermöglicht die unabhängige Steuerung der kabellosen Datenübertragung jedoch weiterhin eine Aufnahme durch das Mikrofon des Headsets und eine entsprechende Datenübertragung der eingehenden Audiodaten von dem Headset an die Datenschnittstelle. Somit wird beispielhaft das Nutzen des Headset-Mikrofons weiterhin ermöglicht, während eine Audioausgabe auf dem Headset in der Aufnahmevertiefung vermieden wird. Mit anderen Worten, ermöglicht die derart ausgestaltete Kopfstütze beispielhaft, wenn das Headset an der Kopfstütze angeordnet ist, dass der Ton nicht aus den Headset-Lautsprechern kommt, da diese an der Kopfstütze aufliegen und somit verdeckt sind. Das Headset-Mikrofon ist hingegen weiterhin nutzbar; an der Kopfstütze angeordnet, kann man das Mikrofon beispielsweise wie gewohnt nach vorne drehen und/oder ausziehen und nutzen, um den Sprachempfang zu verbessern. Eine derart ausgestaltete Kopfstütze ist besonders vorteilhaft, da durch die Datenschnittstelle eine kabellose Datenübertragung an das Headset ermöglicht wird, wobei die Steuervorrichtung zur unabhängigen Steuerung der kabellosen Datenübertragung der eingehenden und ausgehenden Audiodaten durch die Datenschnittstelle in Abhängigkeit von der Erfassung des Headsets durch die Erfassungsvorrichtung ausgestaltet ist.

Gemäß einer bevorzugten Weiterentwicklung der Erfindung kann bei einer Kopfstütze vorgesehen sein, dass die Aufnahmevertiefung zur zumindest abschnittsweisen, insbesondere vollständigen, Aufnahme eines Bügels des Headsets, zur zumindest abschnittsweisen, insbesondere vollständigen, Aufnahme wenigstens einer Ohrmuschel des Headsets und/oder zur Aufnahme des gesamten Headsets in der Kopfstütze ausgestaltet ist. Bevorzugt ist die Aufnahmevertiefung abschnittsweise umlaufend in der Kopfstütze ausgestaltet. Die Aufnahmevertiefung ist mit Bezug zu einer eingebauten Position der Kopfstütze bevorzugt oben und seitlich an der Kopfstütze ausgestaltet. Die Aufnahmevertiefung entspricht bevorzugt einer negativen Form oder im Wesentlichen einer negativen Form des Headsets oder einer negativen Form einer allgemein üblichen Headsetform. Bevorzugt umfasst die Aufnahmevertiefung zusammenhängende oder separate Vertiefungen für die wenigstens eine Ohrmuschel des Headsets und/oder den wenigstens einen Bügel des Headsets.

Die Aufnahmevertiefung weist bevorzugt zumindest eine Positionierungsvorrichtung auf, insbesondere wobei die wenigstens eine Positionierungsvorrichtung asymmetrisch an der Kopfstütze und/oder in der Aufnahmevertiefung angeordnet ist, um eine Aufnahme des Headsets lediglich in einer Orientierung zu ermöglichen. Eine derart ausgestaltete Kopfstütze ist besonders vorteilhaft, da durch die Aufnahmevertiefung eine vorteilhafte Aufnahme des Headsets zumindest abschnittsweise in die Kopfstütze ermöglicht ist.

Gemäß einer bevorzugten Weiterentwicklung der Erfindung kann bei einer Kopfstütze vorgesehen sein, dass die Erfassungsvorrichtung eine mechanische, elektrische und/oder induktive Sensorvorrichtung zur Erfassung des Headsets in der Aufnahmevertiefung umfasst. Die Erfassungsvorrichtung ist bevorzugt sensorisch, elektronisch, mechanisch und/oder induktiv ausgestaltet. Die Erfassungsvorrichtung umfasst bevorzugt zumindest eine Sensorvorrichtung, besonders bevorzugt zumindest zwei oder eine Vielzahl an Sensorvorrichtungen, zur Erfassung des Headsets in der Aufnahmevertiefung. Bevorzugt ist die Erfassungsvorrichtung derart ausgestaltet, dass auch eine fehlerhafte Anordnung des Headsets in der Aufnahmevertiefung erfassbar ist. Bevorzugt wird bei einer Erfassung einer fehlerhaften Anordnung des Headsets in der Aufnahmevertiefung ein optisches und/oder akustisches Signal über das Headset, die Kopfstütze und/oder das Kraftfahrzeug ausgegeben. Eine derart ausgestaltete Kopfstütze ist besonders vorteilhaft, da durch die Erfassungsvorrichtung eine vorteilhafte Erfassung des Headsets in der Aufnahmevertiefung ermöglicht ist.

Gemäß einer bevorzugten Weiterentwicklung der Erfindung kann bei einer Kopfstütze vorgesehen sein, dass die Kopfstütze zumindest einen Lautsprecher umfasst, wobei die Steuervorrichtung zur Steuerung der Ausgabe des zumindest einen Lautsprechers in Abhängigkeit von der Erfassung des Headsets durch die Erfassungsvorrichtung ausgestaltet ist. Bevorzugt ist der zumindest eine Lautsprecher zumindest abschnittsweise in der Kopfstütze integriert. Alternativ oder zusätzlich ist der Lautsprecher außerhalb der Kopfstütze anordenbar. Die Steuerung der Ausgabe des zumindest einen Lautsprechers ist bevorzugt als Steuerung der Datenübertragung von Audiosignalen an den zumindest einen Lautsprecher zu verstehen. Bevorzugt ermöglicht die Kopfstütze somit eine Ausgabe von ausgehenden Audiosignalen durch den zumindest einen Lautsprecher, insbesondere wenn das Headset durch die Erfassungsvorrichtung in der Aufnahmevertiefung erfasst wurde. Somit wird beispielhaft das voranstehend beschriebene Nutzen des Headset-Mikrofons weiterhin ermöglicht, während eine Audioausgabe auf dem Headset in der Aufnahmevertiefung vermieden wird. Mit anderen Worten, ermöglicht die derart ausgestaltete Kopfstütze beispielhaft, wenn das Headset an der Kopfstütze angeordnet ist, dass der Ton nicht aus den Headset-Lautsprechern kommt, da diese an der Kopfstütze aufliegen und somit verdeckt sind, sondern aus den Lautsprechern der Kopfstütze kommt. Eine derart ausgestaltete Kopfstütze ist besonders vorteilhaft, da durch die Lautsprecher eine vorteilhafte Ausgabe, insbesondere eine individuelle Ausgabe, der Audiodaten ermöglicht wird, wenn das Headset in der Aufnahmevertiefung angeordnet ist.

Gemäß einer bevorzugten Weiterentwicklung der Erfindung kann bei einer Kopfstütze vorgesehen sein, dass die Kopfstütze zumindest eine Haltevorrichtung umfasst, wobei die Haltevorrichtung zur haltenden und/oder verriegelnden Aufnahme des Headsets in der Aufnahmevertiefung ausgestaltet ist, insbesondere, wobei die zumindest eine Haltevorrichtung zum haltenden Umgreifen des Headsets, des Bügels und/oder der wenigstens einen Ohrmuschel ausgestaltet ist. Bevorzugt weist die zumindest eine Haltevorrichtung einen initialen Widerstand für ein Einsetzen und/oder eine Entnahme des Headsets in die Aufnahmevertiefung auf. Bevorzugt ist die zumindest eine Haltevorrichtung elastisch verformbar ausgestaltet. Bevorzugt weist die zumindest eine Haltevorrichtung eine Federvorrichtung auf. Bevorzugt umfasst die zumindest eine Haltevorrichtung zumindest einen Magnet, zumindest einen Klips und/oder zumindest eine Steckverbindung. Bevorzugt weist die Kopfstütze zumindest zwei oder eine Vielzahl an Haltevorrichtungen auf, insbesondere wobei die zumindest zwei oder die Vielzahl an Haltevorrichtungen gleichmäßig und/oder symmetrisch an der Kopfstütze angeordnet sind. Bevorzugt umfasst die zumindest eine Haltevorrichtung eine Auswurfvorrichtung, beispielsweise einen Knopf, zum vorteilhaften Auswerfen und/oder Lösen des Headsets aus der zumindest einen Haltevorrichtung und/oder aus der Aufnahmevertiefung. Bevorzugt ist die zumindest eine Haltevorrichtung drehbar und/oder schwenkbar ausgestaltet. Bevorzugt ist die haltende und/oder verriegelnde Aufnahme des Headsets in der Aufnahmevertiefung durch die Haltevorrichtung durch die Erfassungsvorrichtung erfassbar. Besonders bevorzugt ermöglicht die Steuervorrichtung die Bereitstellung von elektrischer Energie durch die Ladevorrichtung in Abhängigkeit von der Erfassung der haltenden und/oder verriegelnden Aufnahme des Headsets in der Aufnahmevertiefung durch die Haltevorrichtung. Mit anderen Worten wird die Bereitstellung von elektrischer Energie bevorzugt nur bei einer erfassten korrekten, haltenden und/oder verriegelnden Aufnahme des Headsets ermöglicht. Eine derart ausgestaltete Kopfstütze ist besonders vorteilhaft, da durch die Haltevorrichtung eine vorteilhafte haltende und/oder verriegelnde Aufnahme des Headsets ermöglicht wird und somit eine sichere Positionierung des Headsets, ein Unfallschutz und/oder eine Vermeidung von losen Teilen im Kraftfahrzeuginneren ermöglicht wird.

Gemäß einer bevorzugten Weiterentwicklung der Erfindung kann bei einer Kopfstütze vorgesehen sein, dass die Kopfstütze als eine Überzug-Kopfstütze ausgestaltet ist und einen Hohlraum zum nachrüstenden Überziehen der Kopfstütze über eine klassische Kopfstütze und zumindest eine Verschlussvorrichtung zum zumindest abschnittsweise Verschließen des Hohlraums aufweist. Die Überzug-Kopfstütze ist als eine Nachrüstlösung für beispielsweise klassische Kopfstützen ohne die technischen Funktionen der erfindungsgemäßen Kopfstütze zu verstehen. Dafür weist die Kopfstütze gemäß dieser Ausgestaltung einen Hohlraum auf, mit dem die Überzug-Kopfstütze über klassische Kopfstützen gestülpt werden kann. Zur Befestigung an der klassischen Kopfstütze weist die Überzug-Kopfstütze bevorzugt zumindest eine Befestigungsvorrichtung, wie einen Klettverschluss, einen Gummizug, ein Seil, Knöpfe und/oder Druckknöpfe auf. Die Überzug-Kopfstütze weist bevorzugt zumindest eine Schnittstelle zur elektrischen, datenkommunizierenden und/oder mechanischen Anbindung an eine Sitzvorrichtung und/oder das Kraftfahrzeug auf. Eine derart ausgestaltete Kopfstütze ist besonders vorteilhaft, da durch den Hohlraum und die Ausgestaltung als Überzug-Kopfstütze eine vorteilhafte Nachrüstlösung für klassische Kopfstützen mit geringen Kosten und Aufwand ermöglicht wird.

Gemäß einer bevorzugten Weiterentwicklung der Erfindung kann bei einer Kopfstütze vorgesehen sein, dass die Kopfstütze, insbesondere die Aufnahmevertiefung, eine UV-C-Vorrichtung zur Bestrahlung des Headsets, insbesondere der wenigstens einen Ohrmuschel und/oder des Bügels, in der Aufnahmevertiefung mit UV-C-Strahlung umfasst, insbesondere, wobei die Steuervorrichtung zur Steuerung der Bestrahlung durch die UV-C-Vorrichtung in Abhängigkeit von der Erfassung des Headsets durch die Erfassungsvorrichtung ausgestaltet ist. Die UV-C-Vorrichtung zur Bestrahlung des Headsets ermöglicht vorteilhaft eine Desinfektion und/oder Reinigung des Headsets, insbesondere der wenigstens einen Ohrmuschel des Headsets. Die UV-C-Vorrichtung zur Bestrahlung des Headsets ermöglicht somit vorteilhaft eine Desinfektion und/oder Reinigung des Headsets, beispielsweise zwischen den Benutzungen, und erhöht somit den Tragekomfort und das Benutzererlebnis für den oder die Anwender. Die UV-C-Vorrichtung ist bevorzugt zumindest abschnittsweise in der Kopfstütze integriert und bestrahlt das Headset zumindest abschnittsweise, wenn dieses in der Aufnahmevertiefung angeordnet ist. Eine derart ausgestaltete Kopfstütze ist besonders vorteilhaft, da durch die UV-C-Vorrichtung eine vorteilhafte Desinfektion und/oder Reinigung des Headsets ermöglicht wird.

Gemäß einer bevorzugten Weiterentwicklung der Erfindung kann bei einer Kopfstütze vorgesehen sein, dass die Kopfstütze, insbesondere die Ladevorrichtung, eine Kühlvorrichtung umfasst, wobei die Kühlvorrichtung zur zumindest abschnittsweisen Kühlung der Kopfstütze, der Ladevorrichtung und/oder des Headsets ausgestaltet ist. Die Kühlvorrichtung ist bevorzugt innerhalb der Kopfstütze angeordnet und/oder besonders bevorzugt passiv, also ohne sich bewegende und/oder angetriebene Bauteile, insbesondere ohne Lüfter, ausgestaltet. Die Kühlvorrichtung ermöglicht es, vorteilhaft eine Wärmeerzeugung der Kopfstütze, insbesondere der Ladevorrichtung, zumindest zu begrenzen und/oder zu vermeiden, sodass die Kopfstütze sich nicht, weniger und/oder langsamer erwärmt. Besonders bevorzugt ist die Kühlvorrichtung zumindest abschnittsweise in einem Randbereich der Kopfstütze angeordnet und/oder ermöglicht eine Kühlung des Headsets in der Aufnahmevertiefung. Bevorzugt ist die Kühlvorrichtung zumindest abschnittsweise als Kühlbleche, Kühlkörper, Kühlpins und/oder Kühlrippen ausgestaltet. Eine derart ausgestaltete Kopfstütze ist besonders vorteilhaft, da durch die Kühlvorrichtung eine vorteilhafte Kühlung der Kopfstütze, der Ladevorrichtung und/oder des Headsets ermöglicht und folglich ein Tragekomfort und/oder Anwendererlebnis verbessert wird.

Gemäß einem zweiten Aspekt der Erfindung wird die Aufgabe durch ein Kopfstützen-System für ein Kraftfahrzeug gelöst. Das Kopfstützen-System weist eine Kopfstütze und ein Headset auf, wobei die Kopfstütze gemäß dem ersten Aspekt ausgestaltet ist. Bei dem beschriebenen Kopfstützen-System ergeben sich sämtliche Vorteile, die bereits zu der Kopfstütze gemäß dem ersten Aspekt der Erfindung beschrieben worden sind. Das Headset ist im Rahmen der Erfindung als eine Kombination aus zumindest einem Lautsprecher und zumindest einem Mikrofon zu verstehen. Das erfindungsgemäße Headset ist von einem Insassen am Kopf tragbar. Bevorzugt umfasst das Headset und/oder das Mikrofon eine Rauschunterdrückung. Verschiedene konstruktive Ausgestaltungen von Headsets sind grundsätzlich bekannt. Das erfindungsgemäße Headset wird bevorzugt primär oder lediglich mit Bezug auf die Wechselwirkung und/oder Interaktion mit der erfindungsgemäßen Kopfstütze beansprucht. Das Headset ist bevorzugt als kabelloses, insbesondere modular kabelloses, Headset zu verstehen. Ein modular kabelloses Headset ist derart zu verstehen, dass das Headset mit einem Kabel und kabellos betrieben werden kann. Das zumindest eine Mikrofon des Headsets ist bevorzugt an einem Arm des Headsets angeordnet, wobei der Arm bevorzugt schwenkbar und/oder ausziehbar ausgestaltet ist, um das Mikrofon in eine bessere Sprachempfangsposition bringen zu können. Ein derart ausgestaltetes Kopfstützen-System ist besonders vorteilhaft, da durch die Kopfstütze die Verwendung des Headsets besonders einfach ermöglicht wird, wobei die Steuervorrichtung die Bereitstellung von elektrischer Energie durch die Ladevorrichtung in Abhängigkeit von der Erfassung des Headsets durch die Erfassungsvorrichtung besonders einfach ermöglicht.

Gemäß einem dritten Aspekt der Erfindung wird die Aufgabe durch eine Sitzvorrichtung für ein Kraftfahrzeug gelöst. Die Sitzvorrichtung weist eine Kopfstütze und eine Sitzfläche für einen Insassen des Kraftfahrzeugs auf, wobei die Kopfstütze gemäß dem ersten Aspekt ausgestaltet ist. Bei der beschriebenen Sitzvorrichtung ergeben sich sämtliche Vorteile, die bereits zu der Kopfstütze gemäß dem ersten Aspekt der Erfindung beschrieben worden sind. Bevorzugt umfasst die Sitzfläche ebenfalls eine Rückenfläche für den Insassen des Kraftfahrzeugs. Bevorzugt weist die Kopfstütze eine elektrische Schnittstelle zur elektrischen Anbindung an die Sitzvorrichtung und/oder an das Kraftfahrzeug und/oder eine mechanische Schnittstelle zur mechanischen Anbindung an die Sitzvorrichtung auf. Alternativ oder zusätzlich ist die Kopfstütze einstückig mit der Sitzvorrichtung ausgestaltet, beispielsweise in Form einer Sitzschale.

Insbesondere umfasst die Sitzvorrichtung zumindest eine Vibrationsvorrichtung und/oder zumindest eine Körperschallvorrichtung. Insbesondere ist die Steuervorrichtung zur Steuerung der zumindest einen Vibrationsvorrichtung und/oder der zumindest einen Körperschallvorrichtung in Abhängigkeit von der Erfassung des Headsets durch die Erfassungsvorrichtung ausgestaltet. Die Vibrationsvorrichtung und/oder die Körperschallvorrichtung sind als Vorrichtungen zu verstehen, die beispielsweise die akustischen Signale der Datenschnittstelle mit Vibrationen und/oder Körperschall, insbesondere innerhalb der Sitzvorrichtung, ergänzen und folglich ein Unterhaltungserlebnis des Anwenders verbessern und/oder immersiver gestalten.

Eine derart ausgestaltete Sitzvorrichtung ist besonders vorteilhaft, da durch die Kopfstütze die Verwendung des Headsets besonders einfach ermöglicht wird, wobei die Steuervorrichtung die Bereitstellung von elektrischer Energie durch die Ladevorrichtung in Abhängigkeit von der Erfassung des Headsets durch die Erfassungsvorrichtung besonders einfach ermöglicht.

Gemäß einem vierten Aspekt der Erfindung wird die Aufgabe durch ein Kraftfahrzeug gelöst. Das Kraftfahrzeug weist zumindest eine Sitzvorrichtung und/oder zumindest eine Kopfstütze auf, wobei die Kopfstütze gemäß dem ersten Aspekt ausgestaltet ist und/oder die Sitzvorrichtung gemäß dem dritten Aspekt ausgestaltet ist. Alternativ oder zusätzlich weist das Kraftfahrzeug zumindest ein Kopfstützen-System auf. Bei dem beschriebenen Kraftfahrzeug ergeben sich sämtliche Vorteile, die bereits zu der Kopfstütze gemäß dem ersten Aspekt der Erfindung und/oder zu der Sitzvorrichtung gemäß dem dritten Aspekt der Erfindung beschrieben worden sind.

Eine erfindungsgemäße Kopfstütze, ein Kopfstützen-System, eine Sitzvorrichtung sowie ein Kraftfahrzeug werden nachfolgend anhand von Zeichnungen näher erläutert. Es zeigen jeweils schematisch:
- Figur 1: in einer Seitenansicht eine Sitzvorrichtung mit einer Kopfstütze,
- Figur 2: in einer perspektivischen Ansicht eine Sitzvorrichtung mit einem KopfstützenSystem, umfassend eine Kopfstütze mit einem Lautsprecher und ein Headset,
- Figur 3: in einer perspektivischen Ansicht eine Sitzvorrichtung mit einem KopfstützenSystem, umfassend eine Kopfstütze und ein Headset mit einem ausziehbaren Mikrofon,
- Figur 4: in einer perspektivischen Ansicht eine Sitzvorrichtung mit einem KopfstützenSystem, umfassend eine als eine Überzug-Kopfstütze ausgestaltete Kopfstütze und ein Headset, und
- Figur 5: in einer Seitenansicht ein Kraftfahrzeug mit einer Sitzvorrichtung und einer Kopfstütze.

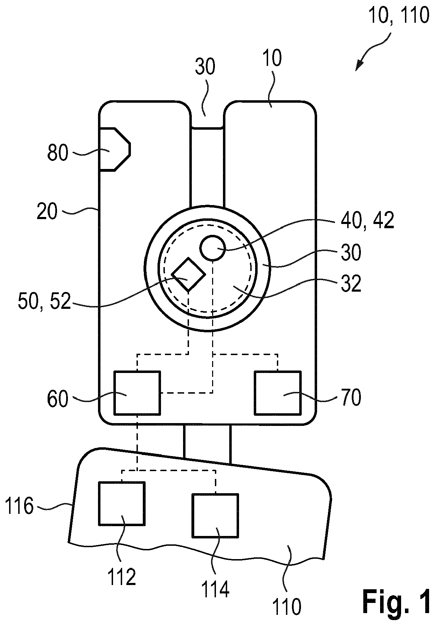

Elemente mit gleicher Funktion und Wirkungsweise sind in den Fig. 1 bis 5 jeweils mit denselben Bezugszeichen versehen.

In Fig. 1 ist schematisch in einer Seitenansicht eine Sitzvorrichtung 110 mit einer Kopfstütze 10 gezeigt. Die Sitzvorrichtung 110 weist ferner eine Sitzfläche 116 für einen Insassen eines Kraftfahrzeugs 100 (nicht gezeigt) auf. Die Kopfstütze 10 weist eine Stützfläche 20 für einen Kopf des Insassen, eine Aufnahmevertiefung 30 für die Aufnahme eines Headsets 120 (nicht gezeigt), eine Erfassungsvorrichtung 40 zur Erfassung des Headsets 120 (nicht gezeigt) in der Aufnahmevertiefung 30, eine Ladevorrichtung 50 zur kabellosen Bereitstellung von elektrischer Energie an das Headset 120 (nicht gezeigt) in der Aufnahmevertiefung 30 und eine Steuervorrichtung 60 zur Steuerung der Bereitstellung von elektrischer Energie durch die Ladevorrichtung 50 in Abhängigkeit von der Erfassung des Headsets 120 (nicht gezeigt) durch die Erfassungsvorrichtung 40 auf. Die Kopfstütze 10 umfasst ferner eine Datenschnittstelle 70, wobei die Datenschnittstelle 70 zur kabellosen Datenübertragung mit dem Headset 120 (nicht gezeigt) ausgestaltet ist, wobei die Steuervorrichtung 60 zur Steuerung der kabellosen Datenübertragung durch die Datenschnittstelle 70 in Abhängigkeit von der Erfassung des Headsets 120 (nicht gezeigt) durch die Erfassungsvorrichtung 40 ausgestaltet ist. Die Datenschnittstelle 70 ist zur kabellosen Datenübertragung von eingehenden und ausgehenden Audiodaten mit dem Headset 120 (nicht gezeigt) ausgestaltet, wobei die Steuervorrichtung 60 zur unabhängigen Steuerung der kabellosen Datenübertragung der eingehenden und ausgehenden Audiodaten durch die Datenschnittstelle 70 in Abhängigkeit von der Erfassung des Headsets 120 (nicht gezeigt) durch die Erfassungsvorrichtung 40 ausgestaltet ist. Die Kopfstütze umfasst einen Lautsprecher 80, wobei die Steuervorrichtung 60 zur Steuerung der Ausgabe des Lautsprechers 80 in Abhängigkeit von der Erfassung des Headsets 120 (nicht gezeigt) durch die Erfassungsvorrichtung 40 ausgestaltet ist. Die Erfassungsvorrichtung 40 umfasst eine induktive Sensorvorrichtung 42 zur Erfassung des Headsets 120 (nicht gezeigt) in der Aufnahmevertiefung 30. Die Kopfstütze 10 weist in der Aufnahmevertiefung 30 eine UV-C-Vorrichtung 32 zur Bestrahlung des Headsets 120 (nicht gezeigt) auf, hier der Ohrmuschel 124 (nicht gezeigt) des Headsets 120 (nicht gezeigt), mit UV-C-Strahlung. Die Steuervorrichtung 60 ist zur Steuerung der Bestrahlung durch die UV-C-Vorrichtung 32 in Abhängigkeit von der Erfassung des Headsets 120 (nicht gezeigt) durch die Erfassungsvorrichtung 40 ausgestaltet.

Die Ladevorrichtung 50 umfasst eine Kühlvorrichtung 52, wobei die Kühlvorrichtung 52 zur zumindest abschnittsweisen Kühlung der Kopfstütze 10, der Ladevorrichtung 50 und des Headsets 120 (nicht gezeigt) ausgestaltet ist. Die Sitzvorrichtung 110 umfasst eine Vibrationsvorrichtung 112 und eine Körperschallvorrichtung 114. Die Steuervorrichtung 60 der Kopfstütze 10 ist zur Steuerung der Vibrationsvorrichtung 112 und der Körperschallvorrichtung 114 in Abhängigkeit von der Erfassung des Headsets 120 (nicht gezeigt) durch die Erfassungsvorrichtung 40 ausgestaltet.

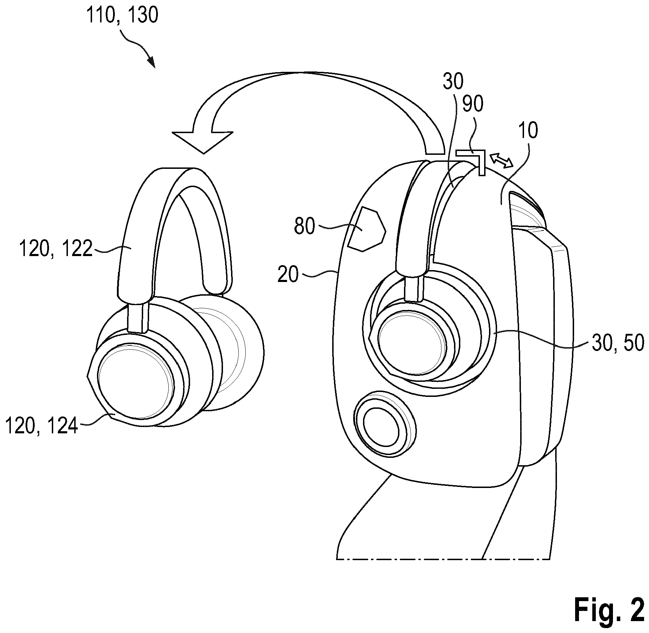

In Fig. 2 ist schematisch in einer perspektivischen Ansicht eine Sitzvorrichtung 110 mit einem Kopfstützen-System 130, umfassend eine Kopfstütze 10 mit einem Lautsprecher 80 und ein Headset 120 gezeigt. Die Aufnahmevertiefung 30 ist zur abschnittsweisen Aufnahme des Bügels 122 des Headsets 120 und zur abschnittsweisen Aufnahme der Ohrmuscheln 124 des Headsets 120 in der Kopfstütze 10 ausgestaltet. Die Kopfstütze 10 umfasst einen Lautsprecher 80, wobei die Steuervorrichtung 60 zur Steuerung der Ausgabe des Lautsprechers 80 in Abhängigkeit von der Erfassung des Headsets 120 durch die Erfassungsvorrichtung 40 ausgestaltet ist. Die Kopfstütze 10 umfasst ferner eine Haltevorrichtung 90, wobei die Haltevorrichtung 90 zur haltenden Aufnahme des Headsets 120 in der Aufnahmevertiefung 30 ausgestaltet ist, wobei die Haltevorrichtung 90 zum haltenden Umgreifen des Headsets 120, hier des Bügels 122, ausgestaltet ist.

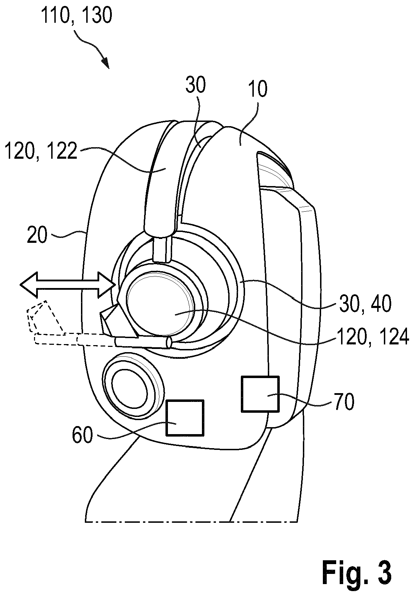

In Fig. 3 ist schematisch in einer perspektivischen Ansicht eine Sitzvorrichtung 110 mit einem Kopfstützen-System 130, umfassend eine Kopfstütze 10 und ein Headset 120 mit einem ausziehbaren Mikrofon gezeigt. In Kombination mit der zuvor beschriebenen unabhängigen Steuerung der kabellosen Datenübertragung durch die Steuervorrichtung 60 wird ermöglicht, dass bei einer Positionierung des Headsets 120 in der Aufnahmevertiefung 30 und einer entsprechenden Erfassung durch die Erfassungsvorrichtung 40, die ausgehenden Daten der Datenschnittstelle 70 nicht an das Headset 120 gesendet werden und damit nicht auf dem Headset 120 ausgegeben werden. Trotz der Positionierung des Headsets 120 in der Aufnahmevertiefung 30 und einer entsprechenden Erfassung durch die Erfassungsvorrichtung 40 ermöglicht die Steuervorrichtung 60 der Kopfstütze 10 jedoch weiterhin eine Aufnahme durch das Mikrofon des Headsets 120 und eine entsprechende Datenübertragung der eingehenden Audiodaten von dem Headset 120 an die Datenschnittstelle 70. Somit wird das Nutzen des Mikrofons des Headsets 120 weiterhin ermöglicht, während eine Audioausgabe auf dem Headset 120 in der Aufnahmevertiefung 30 vermieden wird. Mit anderen Worten, ermöglicht die derart ausgestaltete Kopfstütze 10 beispielhaft, wenn das Headset 120 an der Kopfstütze 10 angeordnet ist, dass der Ton nicht aus den Lautsprechern des Headsets 120 kommt, da diese an der Kopfstütze 10 aufliegen und somit verdeckt sind. Das Mikrofon des Headsets 120 ist hingegen weiterhin nutzbar; an der Kopfstütze 10 angeordnet, kann man das Mikrofon beispielsweise wie gewohnt nach vorne drehen und/oder ausziehen und nutzen, um den Sprachempfang zu verbessern.

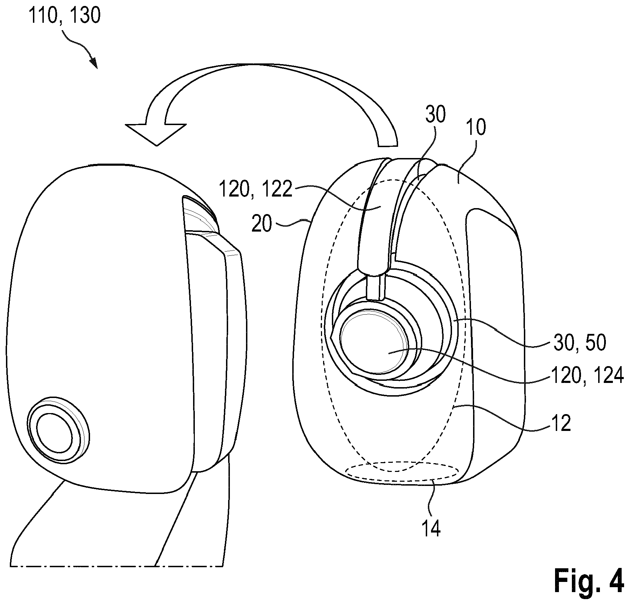

In Fig. 4 ist schematisch in einer perspektivischen Ansicht eine Sitzvorrichtung 110 mit einem Kopfstützen-System 130, umfassend eine als eine Überzug-Kopfstütze ausgestaltete Kopfstütze 10 und ein Headset 120 gezeigt. Die Kopfstütze 10 ist als eine Überzug-Kopfstütze ausgestaltet und weist dafür einen Hohlraum 12 zum nachrüstenden Überziehen der Kopfstütze 10 über eine klassische Kopfstütze und Verschlussvorrichtung 14 zum zumindest abschnittsweise Verschließen des Hohlraums 12 auf.

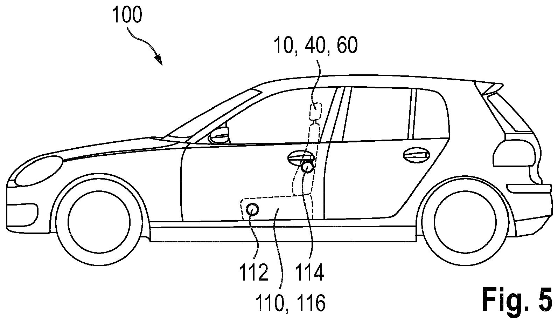

In Fig. 5 ist schematisch in einer Seitenansicht ein Kraftfahrzeug 100 mit einer Sitzvorrichtung 110 und einer Kopfstütze 10 gezeigt. Die Sitzvorrichtung 110 umfasst eine Vibrationsvorrichtung 112 und eine Körperschallvorrichtung 114. Die Steuervorrichtung 60 der Kopfstütze 10 ist zur Steuerung der Vibrationsvorrichtung 112 und der Körperschallvorrichtung 114 in Abhängigkeit von der Erfassung des Headsets 120 (nicht gezeigt) durch die Erfassungsvorrichtung 40 ausgestaltet.

### Bezugszeichenliste

- 10: Kopfstütze
- 12: Hohlraum
- 14: Verschlussvorrichtung

- 20: Stützfläche

- 30: Aufnahmevertiefung
- 32: UV-C-Vorrichtung

- 40: Erfassungsvorrichtung
- 42: Sensorvorrichtung

- 50: Ladevorrichtung
- 52: Kühlvorrichtung

- 60: Steuervorrichtung

- 70: Datenschnittstelle

- 80: Lautsprecher

- 90: Haltevorrichtung

- 100: Kraftfahrzeug

- 110: Sitzvorrichtung
- 112: Vibrationsvorrichtung
- 114: Körperschallvorrichtung
- 116: Sitzfläche

- 120: Headset
- 122: Bügel
- 124: Ohrmuschel

- 130: Kopfstützen-System

## Patentansprüche

1. Kopfstütze (10) für eine Sitzvorrichtung (110) für ein Kraftfahrzeug (100), die Kopfstütze (10) aufweisend eine Stützfläche (20) für einen Kopf eines Insassen des Kraftfahrzeugs (100), eine Aufnahmevertiefung (30) für die Aufnahme eines Headsets (120), eine Erfassungsvorrichtung (40) zur Erfassung des Headsets (120) in der Aufnahmevertiefung (30), eine Ladevorrichtung (50) zur kabellosen Bereitstellung von elektrischer Energie an das Headset (120) in der Aufnahmevertiefung (30) und eine Steuervorrichtung (60) zur Steuerung der Bereitstellung von elektrischer Energie durch die Ladevorrichtung (50) in Abhängigkeit von der Erfassung des Headsets (120) durch die Erfassungsvorrichtung (40).

2. Kopfstütze (10) nach Anspruch 1,
**dadurch gekennzeichnet,**
**dass** die Kopfstütze (10) eine Datenschnittstelle (70) umfasst, wobei die Datenschnittstelle (70) zur kabellosen Datenübertragung mit dem Headset (120) ausgestaltet ist, wobei die Steuervorrichtung (60) zur Steuerung der kabellosen Datenübertragung durch die Datenschnittstelle (70) in Abhängigkeit von der Erfassung des Headsets (120) durch die Erfassungsvorrichtung (40) ausgestaltet ist.

3. Kopfstütze (10) nach Anspruch 2,
**dadurch gekennzeichnet,**
**dass** die Datenschnittstelle (70) zur kabellosen Datenübertragung von eingehenden und ausgehenden Audiodaten mit dem Headset (120) ausgestaltet ist, wobei die Steuervorrichtung (60) zur unabhängigen Steuerung der kabellosen Datenübertragung der eingehenden und ausgehenden Audiodaten durch die Datenschnittstelle (70) in Abhängigkeit von der Erfassung des Headsets (120) durch die Erfassungsvorrichtung (40) ausgestaltet ist.

4. Kopfstütze (10) nach einem der vorangegangenen Ansprüche,
**dadurch gekennzeichnet,**
**dass** die Aufnahmevertiefung (30) zur zumindest abschnittsweisen, insbesondere vollständigen, Aufnahme eines Bügels (122) des Headsets (120), zumindest abschnittsweisen, insbesondere vollständigen, Aufnahme wenigstens einer Ohrmuschel (124) des Headsets (120) und/oder des gesamten Headsets (120) in der Kopfstütze (10) ausgestaltet ist.

5. Kopfstütze (10) nach einem der vorangegangenen Ansprüche,
**dadurch gekennzeichnet,**
**dass** die Erfassungsvorrichtung (40) eine mechanische, elektrische und/oder induktive Sensorvorrichtung (42) zur Erfassung des Headsets (120) in der Aufnahmevertiefung (30) umfasst.

6. Kopfstütze (10) nach einem der vorangegangenen Ansprüche,
**dadurch gekennzeichnet,**
**dass** die Kopfstütze (10) zumindest einen Lautsprecher (80) umfasst, wobei die Steuervorrichtung (60) zur Steuerung der Ausgabe des zumindest einen Lautsprechers (80) in Abhängigkeit von der Erfassung des Headsets (120) durch die Erfassungsvorrichtung (40) ausgestaltet ist.

7. Kopfstütze (10) nach einem der vorangegangenen Ansprüche,
**dadurch gekennzeichnet,**
**dass** die Kopfstütze (10) zumindest eine Haltevorrichtung (90) umfasst, wobei die Haltevorrichtung (90) zur haltenden Aufnahme des Headsets (120) in der Aufnahmevertiefung (30) ausgestaltet ist, insbesondere, wobei die zumindest eine Haltevorrichtung (90) zum haltenden Umgreifen des Headsets (120), des Bügels (122) und/oder der wenigstens einen Ohrmuschel (124) ausgestaltet ist.

8. Kopfstütze (10) nach einem der vorangegangenen Ansprüche,
**dadurch gekennzeichnet,**
**dass** die Kopfstütze (10) als eine Überzug-Kopfstütze ausgestaltet ist und einen Hohlraum (12) zum nachrüstenden Überziehen der Kopfstütze (10) über eine klassische Kopfstütze und zumindest eine Verschlussvorrichtung (14) zum zumindest abschnittsweise Verschließen des Hohlraums (12) aufweist.

9. Kopfstütze (10) nach einem der vorangegangenen Ansprüche,
**dadurch gekennzeichnet,**
**dass** die Kopfstütze (10), insbesondere die Aufnahmevertiefung (30), eine UV-C-Vorrichtung (32) zur Bestrahlung des Headsets (120), insbesondere der wenigstens einen Ohrmuschel (124) und/oder des Bügels (122), in der Aufnahmevertiefung (30) mit UV-C-Strahlung umfasst, insbesondere, wobei die Steuervorrichtung (60) zur Steuerung der Bestrahlung durch die UV-C-Vorrichtung (32) in Abhängigkeit von der Erfassung des Headsets (120) durch die Erfassungsvorrichtung (40) ausgestaltet ist.

10. Kopfstütze (10) nach einem der vorangegangenen Ansprüche,
**dadurch gekennzeichnet,**
**dass** die Kopfstütze (10), insbesondere die Ladevorrichtung (50), eine Kühlvorrichtung (52) umfasst, wobei die Kühlvorrichtung (52) zur zumindest abschnittsweisen Kühlung der Kopfstütze (10), der Ladevorrichtung (50) und/oder des Headsets (120) ausgestaltet ist.

11. Kopfstützen-System (130) für ein Kraftfahrzeug (100), das Kopfstützen-System (130) aufweisend eine Kopfstütze (10) und ein Headset (120),
**dadurch gekennzeichnet,**
**dass** die Kopfstütze (10) nach einem der vorangegangenen Ansprüche ausgestaltet ist.

12. Sitzvorrichtung (110) für ein Kraftfahrzeug (100), die Sitzvorrichtung (110) aufweisend eine Kopfstütze (10) und eine Sitzfläche (116) für einen Insassen des Kraftfahrzeugs (100),
**dadurch gekennzeichnet,**
**dass** die Kopfstütze (10) nach einem der vorangegangenen Ansprüche 1 bis 10 ausgestaltet ist, insbesondere, wobei die Sitzvorrichtung (110) zumindest eine Vibrationsvorrichtung (112) und/oder zumindest eine Körperschallvorrichtung (114) umfasst, insbesondere, wobei die Steuervorrichtung (60) zur Steuerung der zumindest einen Vibrationsvorrichtung (112) und/oder der zumindest einen Körperschallvorrichtung (114) in Abhängigkeit von der Erfassung des Headsets (120) durch die Erfassungsvorrichtung (40) ausgestaltet ist.

13. Kraftfahrzeug (100), aufweisend zumindest eine Sitzvorrichtung (110) und/oder zumindest eine Kopfstütze (10),
**dadurch gekennzeichnet,**
**dass** die zumindest eine Sitzvorrichtung (110) nach Anspruch 12 und/oder die zumindest eine Kopfstütze (10) nach einem der vorangegangenen Ansprüche 1 bis 10 ausgestaltet sind.
